Europäisches Patentamt

European Patent Office

Office européen des brevets

(19)

(11) Numéro de publication : **0 542 888 B1**

(12) **FASCICULE DE BREVET EUROPEEN**

(45) Date de publication du fascicule du brevet :
**10.08.94 Bulletin 94/32**

(51) Int. Cl.⁵ : **C04B 28/04,** C04B 40/00,
E04F 15/12

(21) Numéro de dépôt : **91915676.0**

(22) Date de dépôt : **12.08.91**

(86) Numéro de dépôt international :
**PCT/FR91/00663**

(87) Numéro de publication internationale :
**WO 92/02469 20.02.92 Gazette 92/05**

(54) **CIMENT COMPLEMENTE MELANGE A DES GRANULATS SELECTIONNES.**

(30) Priorité : **10.08.90 FR 9010267**

(43) Date de publication de la demande :
**26.05.93 Bulletin 93/21**

(45) Mention de la délivrance du brevet :
**10.08.94 Bulletin 94/32**

(84) Etats contractants désignés :
**AT BE CH DE DK ES FR GB GR IT LI LU NL SE**

(56) Documents cités :
**WO-A-89/01916
DD-A- 259 188
JP-A-61 205 649
JP-A-79 015 933
CHEMICAL ABSTRACTS, vol. 110, N 9, 1 May
1989, Columbus, Ohio, US; abstract N .
159514G, C. OSTROWSKI, ET
AL.:"Manufacture of selfleveling and quicksetting mortars, especially for flooring substrates on concrete" page 340; see abstract &
DD, A, 259188 (C. OSTROWSKI ET AL) 17
August 1988
CHEMICAL ABTRACTS. vol. 106, No. 14, 6 April
1987, Columbus, Ohio, US; abstract No.
107081M, A. MINAMI ET AL.: "Grout composition" page 316; see abstract & JP, A, 61205649
(A. MINAMI ET AL) 11 September 1986
CHEMICAL ABSTRACTS, vol. 91, No. 16, 15
October 1979, Columbus, Ohio, US; abstract
No. 127995N, K. TAMURA ET AL.: "Molded
cement product with glass-like surface gloss"
page 290; see abstract & JP, A, 79 015 933 (K.
TAMURA ET AL.) 6 February 1979**

(56) Documents cités :
**CHEMICAL ABSTRACTS, vol. 97, No.22, 29
November 1982 Columbus, Ohio, US; abstract
No. 187140P, N. ORLEANSKAYA ET AL.:
"Hydraulic activity of calcium silicates in the
presence of chromium (VI)-containing setting
activators" page 309; see abstract & ZH.
PRIKL. KHIM. vol. 55, No. 8, 1982, LENINGRAD
USSR pages 1710 - 1716;
CHEMICAL ABSTRACTS; vol. 95, No. 12, 21
September 1981, Columbus, Ohio, US; abstract No. 102030P, I. TEOREANU ET AL.:
"Chromia effect on hardening and properties
of low-concentration cement refractory
concretes." page 263; see abstract & MATER.
CONSTR, vol. 10, No.4, 1980, BUCHAREST
ROM. pages 195 - 197**

(73) Titulaire : **CONROY, Michel
61 A, rue des Nouvelles
F-39100 Dole (FR)**

(72) Inventeur : **CONROY, Michel
61 A, rue des Nouvelles
F-39100 Dole (FR)**

(74) Mandataire : **Bruder, Michel et al
Cabinet Michel Bruder
Conseil en Brevets
10, rue de la Pépinière
F-75008 Paris (FR)**

Jouve, 18, rue Saint-Denis, 75001 PARIS

EP 0 542 888 B1

## Description

La présente invention concerne un liant à base de ciment et d'adjuvants qui, en combinaison par malaxage à des agrégats dont la granulométrie est soigneusement sélectionnée d'une part, de l'eau de gâchage d'autre part, permet d'obtenir une pâte très fluide de mise en oeuvre extrêmement aisée, caractérisée en ce que ladite pâte est auto-lissante, auto-nivelante et ne présente pratiquement aucun retrait après la prise du ciment.

On connaît bien les techniques traditionnelles de réalisation de chapes et dallages avec des liants hydrauliques obtenus à partir de ciments artificiels, de granulats de qualité courante et d'eau. Les pâtes ainsi obtenues, d'une consistance variable, sont généralement mises en oeuvre sur des supports grossiers et durcissent en quelques heures, après hydratation du ciment, pour procurer des surfaces planes et lisses au prix de nombreuses et délicates opérations secondaires effectuées après l'étendage dudit ciment. On sait bien que de telles pâtes sont normalement relativement fermes et mêmes plastiques et leur manipulation, qu'il s'agisse du gâchage, du transport, de l'étendage ou du lissage, peuvent être partiellement mécanisées ou entièrement manuelles, selon des techniques qui sont parfaitement connues de l'homme de métier.

On sait également que les caractéristiques mécaniques des ouvrages obtenus à partir de tels liants, même si elles correspondent aux normes en vigueur, manquent de fiabilité dans le temps, et on observe très couramment que de nombreux ouvrages subissent de gros dommages dans la période de garantie décennale, en raison notamment des retraits hydrauliques importants, et des résistances mécaniques faibles résultant de ces mélanges traditionnels. On observera d'ailleurs qu'en raison de ces inconvénients techniques, on est souvent amené, pour répondre aux exigences des revêtements de sols, à recouvrir les chapes ou dalles par des enduits de lissage, afin d'obtenir une planéité satisfaisante.

Plus généralement d'ailleurs, il est tout à fait connu que quelques soient les techniques utilisées, aucune chape ou aucun dallage, obtenu d'une manière traditionnelle, ne réunit les trois caractéristiques essentielles suivantes, surtout lorsqu'il s'agit de recouvrir des surfaces importantes, excédant 100 ou 200 mètres carrés d'un seul tenant :

- la première caractéristique, sans aucun doute la plus importante, concerne le retrait hydraulique de la dalle ou de la chape réalisée par les ciments habituels. On sait par exemple, que pour un mortier tout à fait classique, le retrait hydraulique est de l'ordre de 1 millimètre par mètre linéaire et ce, dans toutes les directions. Ce retrait provoque, au cours du temps, des micro-fissures, des craquelures, et autres ruptures ou dissociations locales, venant sérieusement altérer les propriétés mécaniques globales de la dalle ou de la chape. En réalité, ce problème de retrait peut être tout à fait catastrophique notamment pour des ouvrages de grandes surfaces, dont la fiabilité mécanique peut s'avérer insuffisante au-delà des périodes habituelles de garantie, et créer de ce fait d'importants préjudices.
- La deuxième caractéristique concerne la planéité ou le niveau des dalles et chapes, particulièrement en cas de traitement de surfaces importantes. Ceci résulte notamment de l'irréductible imperfection de la mise en oeuvre manuelle de la pâte, quels que soient les outils utilisés et aussi grande soit l'habilité des professionnels concernés.
- La troisième caractéristique concerne le lissage de la dalle ou de la chape, pour en éliminer les imperfections locales ou les défauts superficiels.

La présente invention a principalement pour objet un mortier ou un béton à base de ciment traditionnel, auquel on rajoute plusieurs adjuvants en quantité et en qualité suffisante, pour conférer à l'ensemble des propriétés d'auto-nivelage, d'auto-lissage, sans retrait substantiel ultérieur de la dalle ou de la chape réalisée avec ce mortier ou béton après la prise. On notera à cet égard que l'on entend, par auto-nivelage, la caractéristique selon laquelle le mortier ou le béton réparti sur une surface grossière, s'établie de lui-même à un niveau horizontal, sans intervention d'un professionnel ou d'un outil spécifique. De même, on entend par auto-lissage la caractéristique selon laquelle le mortier ou le béton réparti sur une surface grossière, prend de lui-même une surface lisse ou uniforme, sans intervention d'un professionnel ou d'un outil spécifique, sauf pour une finition particulière, par exemple pour obtenir une surface glacée.

On trouve dans la littérature de nombreuses propositions de solutions pour obtenir d'un ciment, d'un mortier ou d'un béton, des qualités d'auto-lissage ou d'auto-nivelage, ou encore pour limiter le retrait hydraulique avant ou après la prise dudit mortier, béton, ciment ; c'est notamment le cas de la demande internationale WO-89/01916 déposée le 26 août 1987 au nom de Oy Partek qui préconise de fabriquer un mortier auto-nivelant à partir d'additifs spécialisés mélangés avec un liant tel que du ciment, des agrégats tels que du sable, et de l'eau. Dans sa demande, le déposant indique qu'il est connu de réaliser de tels mortiers en y adjoignant des agents fluidifiants et des agents gonflants dans des proportions restant à déterminer cas par cas ; toutefois, le déposant note que la difficulté de ces compositions réside toujours dans la maîtrise du retrait lors du séchage d'un mortier tendu sur de grandes longueurs en continu. D'après ses enseignements, le demandeur propose d'augmenter considérablement le pourcentage de fibres synthétiques telles que la fibre de polypropylène dans la composition du mortier pour éviter tous les problèmes de rupture due au retrait dudit mortier lorsque celui-ci devient dur ; il était déjà connu que les fibres du type polypropylène constituent un élément de répartition du retrait lorsqu'elles sont utilisées dans des proportions n'excédant pas quelques millièmes de pourcent en poids de la masse totale du mortier ; or, la proportion de fibres de polypropylène préconisée par Oy Partek dans son mortier auto-nivelant est pour le moins très supérieure (0,05 à 3 %), en totale contradiction avec les connaissances habituelles de l'homme du métier qui considère qu'une telle proportion de fibres synthétiques ne peut qu'aboutir à l'inverse de la fluidité, et par conséquent à l'effet inverse d'auto-lissage et/ou d'auto-nivelage du matériau ainsi obtenu. On observera d'ailleurs que compte-tenu de la faible densité de ces fibres (inférieure à 0.9) on peut raisonnablement s'attendre à ce que celles-ci tendent à remonter à la surface du mortier dont la densité moyenne (en phase aqeuse) est aux environs de 2.2, donnant à l'ensemble un aspect rugueux, contrariant ici encore l'un des buts recherchés dans l'invention à savoir les capacités d'auto-lissage du même matériau. Par ailleurs, le produit proposé dans la demande internationale préconise un certain nombre de composants entrant dans des proportions particulières dont la réalisation s'avère à l'examen approfondi soit irréalisable, soit contraire à toutes les règles et usages universellement reconnus. C'est, par exemple, le cas des cendres volantes dont le cumul avec le ciment procure une charge dont il est difficile de contrôler le retrait ; de même, la qualité du sable utilisé pour réaliser le mortier semble indifférent, alors que ses qualités physiques, chimiques et granulométriques doivent être particulièrement sélectionnées pour procurer à l'ensemble des capacités d'auto-lissage et d'auto-nivelage.

Selon la caractéristique principale de la présente invention, on a pu déterminer que l'adjonction à un ciment, à un mortier ou à un béton traditionnel de produits fluidifiants et d'agents expansifs dans des proportions déterminées procurait aux ouvrages obtenus par malaxage du ciment ainsi complémenté avec des granulats classiques ou sélectionnés, la combinaison des trois propriétés recherchées : auto-lissage, auto-nivelage et retrait nul. Ce résultat est atteint lorsque, pour un ciment de type Portland, par exemple de classe 55, on ajoute un agent fluidifiant dans des proportions comprises entre 0,5 et 4 % en poids dudit ciment, et un agent expansif suivant un dosage variant entre 0,000001 à 0,00099 % rapportées au poids du même ciment.

Pour le ciment complémenté suivant l'invention, les agents fluidifiants agissent essentiellement en ce qu'ils permettent de diminuer dans des proportions très sensibles la quantité d'eau nécessaire pour réaliser la pâte. Il convient de rappeler ici, que la résistance mécanique est inversement proportionnelle à l'indice de vide du mortier ou du béton après l'évaporation de son eau ; on sait en effet, que pour 1 % de vide dans le béton, sa résistance mécanique diminue de 2 %. Il est donc essentiel de remplacer l'eau par les produits fluidifiants, de façon à diminuer le paramètre d'eau (par conséquent, conserver la résistance maximale du béton), tout en procurant à l'ensemble du ciment, du mortier ou du béton prêt à poser, une coulabilité excellente, assurant les caractéristiques recherchées d'auto-nivelage et d'auto-lissage.

S'agissant des agents expansifs ou gonflants, ceux-ci interviennent en complément dans le ciment conforme à l'invention, pour venir compenser très exactement le retrait hydraulique normalement observé pour tout mortier ou béton traditionnel. On sait aussi que le retrait d'un mortier ou d'un béton varie sensiblement suivant la qualité et la granulométrie des agrégats auxquels le mortier ou le béton est mélangé. On verra à cet égard que la meilleure efficacité concernant le ciment suivant l'invention sera trouvée lorsqu'il sera malaxé avec des agrégats sélectionnés comme il sera dit plus loin. Le retrait résiduel du produit constitué par le ciment et lesdits agrégats sera finalement compensé par un agent expansif dont le gonflement sera exactement équivalent au retrait prévisible dudit produit. La proportion d'agents expansifs retenue pour le ciment complémenté selon l'invention correspond naturellement à cette dernière caractéristique, tout en préservant une durée de gonflement faible pour éviter que ledit gonflement ne continue au-delà de la prise du ciment, responsable, on le sait, de micro-fissurations très préjudiciables de l'ouvrage . Il est tout à fait clair que l'on peut utiliser pour le ciment complémenté selon l'invention, n'importe quel agent fluidifiant et notamment les produits suivants : lignosulfonate de sodium, saccharose, gluconate de sodium, acides sulfoniques, naphtalène sulfoné formaldéhyde, lignosulfonate de calcium, carbohydrate, acides aminés ou polyhydroxycarboxyliques, ou encore un mélamine sulfonée, qui parait d'ailleurs constituer le compromis économique le plus satisfaisant.

S'agissant de même de l'agent expansif utilisé en combinaison dans le ciment suivant l'invention, il a été retenu la poudre d'aluminium micronisée suivant une finesse adaptée. Il est évident que d'autres agents gonflants tels que le carbure de calcium, la chaux vive, l'eau oxygénée, le fer en poudre, l'hypochlorite de calcium, la magnésie, la résine vinylique ou même l'alumine, peuvent également convenir, moyennant une adaptation des proportions.

Selon une seconde caractéristique essentielle de l'invention, les performances optimales sont obtenues en mélangeant par malaxage le ciment complémenté des additifs fluidifiants et gonflants précédemment décrits, avec des agrégats constitués essentiellement de sables siliceux dont la granulométrie s'échelonne de 0 à 4 mm, suivant la table de répartition qui suit :

| granulométrie des agrégats (en mm) | | | répartition en poids (en %) | | |
|---|---|---|---|---|---|
| 0 | à | 0,08 | 12 | à | 0 |
| 0,08 | à | 0,315 | 18 | à | 3,5 |
| 0,315 | à | 0,630 | 14 | à | 6,5 |
| 0,630 | à | 0,8 | 6 | à | 11,0 |
| 0,8 | à | 1 | 5 | à | 7,5 |
| 1 | à | 2 | 23 | à | 10,0 |
| 2 | à | 2,5 | 22 | à | 13,0 |
| 2,5 | à | 3,15 | | | 25,0 |
| 3,15 | à | 4 | | | 23,5 |

On a pu déterminer qu'une telle sélection d'agrégats répondant à la table décrite ci-dessus, malaxés avec un ciment traditionnel, procure au mortier correspondant des qualités remarquables de plasticité permettant d'obtenir un effet d'auto-nivelage inattendu, tout en conférant audit mortier un retrait minimal ; ceci résulte de l'emboîtement granulométrique à haute compacité des granulats, procurant ainsi un indice de vide extrêmement bas, ce qui limite considérablement les retraits et procure des caractéristiques de résistance mécanique à la compression extrêmement élevées pour ce type de mortier, supérieur à 40 MPA, alors que pour un mortier traditionnel, non fluidifié, on sait que la résistance n'excède pas 20 MPA en moyenne (30 pour les mortiers fluidifiés), avec des retraits hydrauliques voisins du millimètre par mètre linéaire. Bien entendu, une chape ou une dalle confectionnée avec un ciment complémenté selon l'invention, mélangé avec les granulats sélectionnés conformément à la courbe granulométrique qui vient d'être donnée, présente des performances exceptionnelles puisqu'en particulier, il apparaît possible d'obtenir des surfaces d'un seul tenant de l'ordre de 1000 mètres carrés, sans retrait substantiel, en préservant, voire en augmentant, les qualités mécaniques du ciment, du mortier ou du béton, tout en assurant un auto-nivelage et un auto-lissage presque parfaits de l'ouvrage en question.

Complémentairement, la quasi nullité du retrait hydraulique dû à l'action conjuguée de l'agent gonflant et de la sélection des granulats utilisés, apparaît extrêmement avantageuse à au moins deux titres : elle évite la mise en place de joints de retrait et permet de supprimer les armatures de répartition noyées.

Outre la combinaison agent fluidifiant/agent gonflant, caractérisant le ciment, le mortier ou le béton selon l'invention, il peut être encore incorporé différents adjuvants traditionnels énumérés et discutés ci-après :

1) Un agent rétenteur d'eau choisi parmi les matières actives suivantes :
- abiétade de calcium, acétate de polyvinyle,
- alginate de sodium, bentonite,
- caséine stabilisée, cendres volantes,
- chaux hydraulique, fécule,
- Kieselguhr, stéarate de polyvinyle.

En maintenant l'eau de manière uniforme dans la masse du matériau, l'agent rétenteur incorporé dans un complément selon l'invention permet de préserver les bonnes caractéristiques mécaniques et géométriques de la dalle obtenue, quels que soient les excédents d'eau apportés lors du gâchage de la pâte de ciment, béton ou mortier.

2) Un agent colloïdal, choisi parmi les matières actives suivantes :
- albuminoïde, alginate de sodium,
- amidon, latex,
- carboxyméthylcellulose, caséine stabilisée, cellulose,
- dextrine, tanin, fécule.

Un tel agent améliore encore la coulabilité de la pâte de mortier ou béton, en ce qu'il lui confère une bonne homogénéité au coulage, c'est-à-dire, sans rupture de film, et sans ségrégation des ingrédients initiaux.

3) Un agent stabilisateur, choisi parmi les matières actives suivantes :
- abiétate de calcium, argile,
- bicarbonate de sodium ou de potassium,
- alumine colloïde, cendres volantes,
- chaux hydraulique, éther cellulosique,

4

- silicate de sodium.

Un tel adjuvant contribue à stabiliser la combinaison agent fluidifiant/agent gonflant selon l'invention, et donc à préserver et prolonger son activité. Ceci augmente le temps de bonne ouvrabilité du mortier frais, pendant lequel les caractéristiques précitées d'auto-nivelage et d'auto-lissage sont effectives.

4) Un agent retardateur de gélification et de prise, choisi parmi les matières actives suivantes :
- acide gluconique, acide phosphorique,
- acide salicylique, acides hydroxycarboxyliques, amidon, amines,
- argiles, borax, sucres, lignosulfonates.

Un tel agent ou adjuvant augmente l'effet auto-lissant d'un ciment selon l'invention, en particulier en évitant la phénomène de "rides" à la surface de la peau du mortier frais, pendant sa mise en place.

5) Un agent catalyseur de durcissement, choisi parmi les matières actives suivantes :
- carbonate de lithium, chlorure de lithium,
- aluminate de sodium, sulfate de sodium.

De manière traditionnelle, un tel adjuvant accélère et accroît le pouvoir de durcissement du liant hydraulique composant le mortier ou le béton, ce qui permet de mettre à disposition plus rapidement les dalles et chapes obtenues selon l'invention et améliore encore leurs caractéristiques mécaniques.

6) Un agent anti-moussant, choisi parmi les matières actives suivantes :
- alcools gras, alcools légers, alkylphénol polyoxyéthyléné,
- émulsions d'hydrocarbures, nonylphénol, phosphate de tri-butyle,
- phtalate de butyle, protéines dégradées, silicones,
- stéarate de butyle.

De manière traditionnelle un tel adjuvant ou agent élimine les mousses et bulles provenant de l'entraînement de l'air au cours du malaxage, du transport et de la manipulation de la pâte de béton ou mortier, ce qui ne contrarie pas l'aspect lisse des chapes et dalles obtenues selon l'invention.

7) Un agent hydrofuge, choisi parmi les matières actives suivantes :
- albumine, acide caprylique, caprique, acide oléique,
- alginate de sodium, alun, amidon, carbonate de sodium et de potassium,
- bentonite, cendres volantes, chaux grasses, colophane.

De manière traditionnelle, un tel adjuvant imperméabilise les chapes et dalles obtenues selon l'invention, en évitant la pénétration d'eau, d'hydrocarbures dans le matériau.

8) Un agent d'adhérence, choisi parmi les matières actives suivantes :
- copolymère de propionate, chlorure de polyvinyle,
- acétate de polyvinyle, amidon, latex, carboxyméthycellulose,
- caséine stabilisée, chaux grasses, méthycellulose, gélatine.

De manière traditionnelle, après séchage des dalles, un tel adjuvant augmente l'adhérence de ces dernières aux supports sur lesquels elles sont appliquées.

Bien entendu, selon la description précédente, l'une des matières actives identifiées peut procurer simultanément plusieurs des fonctions précitées.

Enfin, il est bien évident que d'autres liants hydrauliques ou d'autres agrégats pourraient être utilisés pour obtenir les résultats recherchés par la présente invention, sous réserve naturellement d'adapter les proportions à l'intérieur des fourchettes qui viennent d'être données :
- S'agissant des liants hydrauliques, différentes matières ou matériaux peuvent être retenus pour être mélangés avec les compléments conformes à l'invention, parmi lesquels on peut citer : le ciment artificiel Portland, le ciment de hauts fourneaux, le ciment fondu, le sulfate de calcium anhydre, le gypse, le métakaolin.
- S'agissant des agrégats, différents matériaux usuels peuvent être retenus pour être mélangés avec les compléments conformes à l'invention, parmi lesquels on peut citer : les granulats siliceux, calcaires, granitiques, basaltiques, le ferrophosphore, le ferrosilicium, la barytine, la magnétite, la goethite et zircone. On peut aussi utiliser des matériaux à plus haute résistance, notamment de synthèse, comme le corindon, le carbure de silicium, le carbure de bore, des paillettes métalliques, du granite, du grès, du quartz, du silex, du marbre, du porphyre.

Pour compléter les agrégats, on peut aussi mélanger aux compléments selon l'invention des ajouts actifs assurant une continuité granulométrique de la pâte ou mortier. Parmi ces ajouts actifs, on peut citer les cendres volantes et flottantes, les pouzzolanes, les laitiers, les fillers calcaires tels que le carbonate de calcium, le basalte, le kieselguhr, la bentonite. On peut aussi utiliser des ajouts inertes, c'est-à-dire enrobant simplement les granulats, comme les fumées de silice.

Selon un exemple préféré de réalisation de mortier ou de béton réalisé par malaxage par exemple par des dispositifs tels qu'ils seront décrits plus loin, d'un ciment complémenté conforme à l'invention, avec des charges et des granulats, il est proposé ci-après une composition permettant d'obtenir simultanément les trois caractéristiques des mortiers ou béton, conforme à l'invention.

Pour obtenir un mètre cube de mortier, on déverse dans un dispositif malaxeur, mobile ou non, 300 kilos de ciment, par exemple du type Portland de classe 55, avec des charges sphéroïdales telles que des cendres volantes, à raison de 400 kilos, des granulats constitués par du sable siliceux, dont la granulométrie varie entre 0 et 4 millimètres, suivant une répartition exactement conforme à la courbe proposée ci-avant, correspondant à 1428 kilos ; cet ensemble mélangé avec de l'eau procure une pâte dont la plasticité est maximale, permettant d'obtenir un auto-nivellement et un retrait hydraulique minimum.

Conformément à l'invention, il est ensuite ajouté un fluidifiant à raison de 7 kilos, qui est en fait un polynaphtalène sulfonate de sodium, auquel on ajoute d'ailleurs 0,8 Kg de Thiosulfate de sodium afin d'annuler le retard de prise qu'entraîne ce type de fluidifiant, et un agent expansif constitué par de la poudre d'aluminium micronisé, à raison de 18 grammes, auquel on ajoute 0,5 Kg, voire plus, de bichromate de potassium (éventuellement remplacé par l'oxyde chromique qui, toutefois, n'est pas ou est peu soluble dans l'eau) pour pouvoir travailler le mortier obtenu une heure, et même davantage, avant le début de l'expansion qui, sans cela, démarrerait quelques minutes après l'hydratation du mortier, pou se terminer une heure après environ ; l'ensemble est ensuite malaxé avec 200 kilos d'eau pour obtenir la pâte finale.

Dans ces conditions, ladite pâte présente toutes les caractéristiques de retrait quasiment nul, d'auto-nivellement quasi parfait et d'auto-lissage tout à fait exceptionnel. Un tel mortier pouvant d'ailleurs faire l'objet d'additifs secondaires permettant d'optimiser les caractéristiques selon sa destination finale, ainsi qu'il a été dit précédemment, peut être coulé en continu, jusqu'à un niveau prédéterminé et ce, en vue de la confection de dallage, de chape, de micro-chape, et plus généralement de toutes surfaces ou sols à destination des bâtiments d'habitation, tertiaires, publics, d'industrie, qu'il s'agisse d'ouvrages intérieurs ou extérieurs, en locaux secs ou humides.

**Revendications**

1.  Ciment complémenté pour l'obtention d'un mortier ou d'un béton auto-lissant, auto-nivelant et sans retrait, comprenant principalement un liant hydraulique, artificiel ou non, des additifs, et au moins une combinaison d'un agent fluidifiant entrant à raison d'un dosage compris entre 0,5 et 4 % en poids du ciment artificiel et d'un agent expansif entrant à raison d'un dosage compris entre 0,000001 et 0,00099 % en poids dudit liant hydraulique.

2.  Ciment complémenté selon la revendication 1 caractérisé en ce que l'agent fluidifiant comprend au moins une des matières actives suivantes, à savoir un complexe mélamine sulfoné-formaldéhyde, lignosulfonate de sodium, saccharate, gluconate de sodium, acides sulfoniques, complexe naphtalène sulfoné formaldéhyde, lignosulfonate de calcium, carbohydrates, acides aminés, acides poly-hydroxycarboxyliques.

3.  Ciment complémenté selon l'une quelconque des revendications 1 ou 2 caractérisé en ce que l'agent gonflant comprend au moins une des matières actives suivantes, à savoir sulfate de calcium, poudre d'aluminium, carbure de calcium, chaux vive, eau oxygénée, fer en poudre, hypochlorite de calcium, magnésie, résine vinylique, alumine.

4.  Ciment complémenté selon l'une quelconque des revendications précédentes, caractérisé en ce qu'il comprend au moins un adjuvant complémentaire à savoir un agent retardateur de gélification, un agent stabilisateur, un agent colloïde, un agent rétenteur d'eau.

5.  Mortier ou béton prêt à l'emploi, auto-lissant, auto-nivelant et sans retrait, caractérisé en ce qu'il est obtenu par malaxage d'un ciment complémenté selon l'une quelconque des revendications 1 à 4 avec de l'eau et une charge comportant au moins des granulats sélectionnés.

6.  Mortier ou béton selon la revendication 5 caractérisé en ce que les granulats sélectionnés ont une granulométrie comprise entre 0 et 4 millimètres de diamètre.

7.  Mortier ou béton selon l'une quelconque des revendications 5 ou 6 caractérisé en ce que la répartition granulométrique des matériaux formant 100 % en poids des granulats s'établit comme il suit :

| Granulométrie des agrégats (en mm) | | | | | répartition en poids (en %) | | |
|---|---|---|---|---|---|---|---|
| – 0 | à | 0,08 | = | 12 | à | 0 | |
| – 0,08 | à | 0,315 | = | 18 | à | 3,5 | |
| – 0,315 | à | 0,630 | = | 14 | à | 6,5 | |
| – 0,630 | à | 0,8 | = | 6 | à | 11,0 | |
| – 0,8 | à | 1 | = | 5 | à | 7,5 | |
| – 1 | à | 2 | = | 23 | à | 10,0 | |
| – 2 | à | 2,5 | = | 22 | à | 13,0 | |
| – 2,5 | à | 3,15 | = | | | 25,0 | |
| – 3,15 | à | 4 | = | | | 23,5 | |

8. Mortier ou béton spécifique selon la revendication 7 caractérisé en ce que, pour 1 mètre cube dudit mortier ou béton :
- le ciment artificiel, un Portland de classe 55 entre pour 300 kilos,
- la charge formée d'une part de matériaux sphéroïdaux du type cendres volantes et d'autre part de sable siliceux dont la granulométrie suit la courbe selon la revendication 7, entre respectivement pour 400 kilos et 1428 kilos,
- l'agent fluidifiant, un polynaphtalène sulfonate de sodium entre pour 7 kilos,
- l'agent expansif, une poudre d'aluminium micronisé, entre pour 18 grammes.
- l'eau entre pour 200 kilos.

9. Mortier ou béton spécifique selon la revendication 8, caractérisé en ce qu'on ajoute du thiosulfate de sodium à raison d'au moins 0,8 Kg par m³ de mortier ou béton.

10. Mortier ou béton spécifique selon l'une des revendications 8 ou 9, caractérisé en ce qu'on ajoute du bichromate de potassium ou de l'oxyde chromique à raison d'au moins 0,5 Kg par m³ de mortier ou de béton.

**Patentansprüche**

1. Zement mit Zusätzen zur Erzeugung eines Mörtels oder eines selbstglättenden, selbstnivellierenden Betons ohne Schwund, welcher hauptsächlich ein hydraulisches Bindemittel, welches künstlich oder nicht künstlich ist, Zusätze und wenigstens eine Kombination aus einem Flußmittel in einem Mischungsverhältnis, welches zwischen 0,5 und 4 Gew.-% künstlichem Zement liegt, und aus einem Expansionsmittel mit einem Mischungsverhältnis aufweist, welches zwischen 0,000001 und 0,00099 Gew.-% des hydraulischen Bindemittels liegt.

2. Zement mit Zusätzen nach Anspruch 1, **dadurch gekennzeichnet,** daß das Flußmittel wenigstens einen der folgenden aktiven Stoffe aufweist, welche einen Melamin-Schwefelformaldehydkomplex, Natriumlignosulfonat, Saccharat, Natriumgluconat, Sulfonsäuren, einen Naphthalensulfonformaldlehydkomplex, Kalziumlignosulfat, Kohlenwassertoffe, Aminosäuren und Polyhydroxycarboxylsäuren umfassen.

3. Zement mit Zusätzen nach Anspruch 1 oder 2, **dadurch gekennzeichnet,** daß das Quellmittel wenigstens einen der folgenden aktiven Stoffe aufweist, welche Kalziumsulfat, Aluminiumpulver, Kalziumkarbid, Ätzkalk, mit Sauerstoff angereichertes Wasser, Eisenpulver, Kalziumhypochlorid, Magnesiumoxid und Aluminiumoxid umfassen.

4. Zement mit Zusätzen nach einem der vorangehenden Ansprüche, **dadurch gekennzeichnet,** daß er wenigstens ein zusätzliches Hilfsmittel aufweist, welches ein Aushärtungsverzögerungsmittel, ein Stabilisationsmittel, ein Kolloidmittel und ein Wasserretensionsmittel umfaßt.

5. Mörtel oder Beton, einsetzbar in selbstglättender und selbstnivellierender Form ohne Schwund, **dadurch gekennzeichnet,** daß er durch Mischen eines Zements mit Zusätzen nach einem der vorangehenden Absprüche 1 bis 4 mit Wasser und einem Zuschlag erhalten wird, welcher wenigstens selektionierte Granulate umfaßt.

6. Mörtel oder Beton nach Anspruch 5, **dadurch gekennzeichnet,** daß die selektionierten Granulate eine Korngröße zwischen 0 und 4 Millimetern im Durchmesser aufweisen.

7. Mörtel oder Beton nach einem der Ansprüche 5 oder 6, **dadurch gekennzeichnet,** daß die Korngrößenverteilung der Stoffe 100 Gew.-% der Granulate ausmacht und sich wie folgt darstellt:

| Korngröße der Zuschlagstoffe (in mm) | | | | | Gewichtsverteilung (in %) | | |
|---|---|---|---|---|---|---|---|
| – | 0 | bis | 0,08 | = | 12 | bis | 0 |
| – | 0,08 | bis | 0,315 | = | 18 | bis | 3,5 |
| – | 0,315 | bis | 0,630 | = | 14 | bis | 6,5 |
| – | 0,630 | bis | 0,8 | = | 6 | bis | 11,0 |
| – | 0,8 | bis | 1 | = | 5 | bis | 7,5 |
| – | 1 | bis | 2 | = | 23 | bis | 10,0 |
| – | 2 | bis | 2,5 | = | 22 | bis | 13,0 |
| – | 2,5 | bis | 3,15 | = | | | 25,0 |
| – | 3,15 | bis | 4 | = | | | 23,5 |

8. Mörtel oder Beton gemäß Anspruch 7, **dadurch gekennzeichnet,** daß man für einen Kubikmeter des Mörtels oder des Betons folgendes erhält:
   - künstlichen Zement aus Portlandzement der Klasse 55 mit bis zu 300 Kilogramm,
   - die Charge einerseits von sphäroiden Stoffen von Flugaschensorten und andererseits von Siliziumsand gebildet wird, dessen Korngröße der Kurve nach Anspruch 7 entspricht, zwischen bis zu 400 Kilogramm und 1428 Kilogramm,
   - das Flußmittel von einem Natriumpolynaphthalensulfonat mit bis zu 7 Kilogramm gebildet wird,
   - das Expansionsmittel von einem sehr feinen Aluminiumpulver mit bis zu 18 Gramm gebildet wird, und
   - Wasser bis zu 200 Kilogramm.

9. Mörtel oder Beton nach Anspruch 8, **dadurch gekennzeichnet,** daß man Natriumthiosulfat mit wenigstens 0,8 kg pro m³ Mörtel oder Beton zugibt.

10. Mörtel oder Beton nach Anspruch 8 oder 9, **dadurch gekennzeichnet,** daß man Kaliumbichromat oder Chromoxid mit wenigstens 0,5 kg pro m³ Mörtel oder Beton zugibt.

## Claims

1. Cement enhanced to produce a self-smoothing, self-levelling, non-shrinking mortar or concrete, consisting principally of a hydraulic binder, artificial or otherwise, additives, and at least a combination of a plasticizing agent included in the proportion of between 0.5 and 4% of the weight of the artificial cement, and an expanding agent included in the proportion of between 0.000001 and 0.00099% of the weight of the said hydraulic binder.

2. Cement enhanced in accordance with Claim 1 characterised by the fact that the plasticizing agent contains at least one of the following active substances, i.e. a sulphonated melamine-formaldehyde compound, sodium lignosulphonate, saccharate, sodium gluconate, sulphonic acids, sulphonated naphthalene formaldehyde compound, calcium lignosulphonate, carbohydrates, amino acids, polyhydroxycarboxylic acids.

3. Cement enhanced in accordance with either Claim 1 or 2 characterised by the fact that the expanding agent includes at least one of the following active substances, i.e. calcium sulphate, powdered aluminium, calcium carbide, quicklime, hydrogen peroxide, powdered iron, calcium hypochlorite, magnesium oxide, vinyl resin, alumina.

4. Cement enhanced in accordance with any of the preceding Claims, characterised by the fact that it contains at least one additional adjuvant, i.e. a gelling retarder, a stabilizer, a colloidal agent, a water retention agent.

5. Ready-to-use mortar or concrete, self-smoothing, self-levelling and non-shrinking, characterised by the fact that it is produced by mixing a cement enhanced in accordance with any of Claims 1 to 4, with water and a filler comprising at least selected aggregates.

6. Mortar or concrete in accordance with Claim 5 characterised by the fact that the selected aggregates have a particle size of between 0 and 4 millimetres in diameter.

7. Mortar or concrete in accordance with either Claim 5 or 6 characterised by the fact that the particle size distribution of the materials making up 100% by weight of the aggregate is as follows:

```
Particle size of aggregates (mm)      Distribution by weight
(%)

- 0      to  0.08      =      12  to  0
- 0.08   to  0.315     =      18  to  3.5
- 0.315  to  0.630     =      14  to  6.5
- 0.630  to  0.8       =      6   to  11.0
- 0.8    to  1         =      5   to  7.5
- 1      to  2         =      23  to  10.0
- 2      to  2.5       =      22  to  13.0
- 2.5    to  3.15      =      25.0
- 3.15   to  4         =      23.5
```

8. Specific mortar or concrete in accordance with Claim 7 characterised by the fact that, for 1 cubic metre of the said mortar or concrete:
   - the artificial cement, Portland grade 55, is included at the rate of 300 kilos,
   - the filler consisting of spheroidal materials of the fly-ash type on the one hand, and siliceous sand with a particle size as per the curve in Claim 7 on the other hand, is included at the rate of 400 kilos and 1428 kilos respectively,
   - the plasticizing agent, a sodium sulphonate polynaphthalene, is included at the rate of 7 kilos,
   - the expanding agent, a micronised powdered aluminium, is included at the rate of 18 grammes,
   - water is included at the rate of 200 kilos.

9. Specific mortar or concrete in accordance with Claim 8, characterised by the fact that sodium thiosulphate is added at the rate of at least 0.8 kg per cubic metre of mortar or concrete.

10. Specific mortar or concrete in accordance with either Claim 8 or 9, characterised by the fact that potassium bichromate or chromic oxide is added at the rate of at least 0.5 kg per cubic metre of mortar or concrete.

9